# EUROPEAN PATENT SPECIFICATION

(11) **EP 4 349 124 B1**
(45) Date of publication and mention of the grant of the patent: **25.02.2026**
(21) Application number: 22816491.9
(22) Date of filing: 03.06.2022
(51) Int. Cl.: H04W 36/36, H04L 5/00, H04W 76/19, H04W 36/00, H04W 36/30

(54) **FAILURE RECOVERY IN WIRELESS COMMUNICATIONS**
AUSFALLWIEDERHERSTELLUNG IN DER DRAHTLOSEN KOMMUNIKATION
RÉCUPÉRATION DE DÉFAILLANCE DANS DES COMMUNICATIONS SANS FIL

(30) Priority: 03.06.2021 US 202163196670 P
(43) Date of publication of application: 10.04.2024
(73) Proprietor: LG Electronics Inc., Yeongdeungpo-gu Seoul 07336 (KR)
(72) Inventor: KIM, Hongsuk, Seoul 06772 (KR); JUNG, Sunghoon, Seoul 06772 (KR)
(74) Representative: Plasseraud IP
(86) International application number: PCT/KR2022/007895
(87) International publication number: WO 2022/255832

(56) References cited:
- WO-A1-2019/240770
- WO-A1-2021/029755
- CN-A- 112 119 597
- US-A1- 2020 350 972
- US-A1- 2020 350 972
- US-A1- 2021 044 342
- US-A1- 2021 050 968
- US-A1- 2021 126 693
- US-A1- 2023 254 712

## Description

### Technical Field

The present disclosure is related to a failure recovery in wireless communications.

### Background Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

In wireless communication, a user equipment (UE) may detect a failure (e.g., radio link failure (RLF)) on a PCell. To recover the failure, for example, the UE may perform a connection re-establishment procedure. However, the connection re-establishment procedure may consume lots of time, and may cause a data interruption for the UE. Therefore, fast recovery of the failure may be required. US2021/050968 A1, US2020/350972 A1 and CN112119597A each relate to radio link monitoring in Multi-TRP (Transmission and reception point) scenarios.

### Disclosure of Invention

### Technical Problem

An aspect of the present disclosure is to provide method and apparatus for a failure recovery in a wireless communication system.

Another aspect of the present disclosure is to provide method and apparatus for a failure recovery using a multiple transmit/receive point (MTRP) in a wireless communication system.

### Solution to Problem

According to an aspect of the present disclosure, a method according to claim 1 is provided. In a further aspect, an apparatus according to claim 14 is provided.

### Advantageous Effects of Invention

The present disclosure can have various advantageous effects.

For example, the disclosure supports a fast connection failure recovery scenario even though there is no serving cell information at all to perform a connection failure recovery mechanisms, e.g. fast MCG failure recovery or CHO-based failure recovery. Hence the UE doesn't perform the RRC Re-establishment procedure which may cause significant data interruption time (up to 30sec) even in the case that there is no available serving cell information for the connection failure recovery.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Ac-
cordingly, the specific effects of the present disclosure are not limited to those explicitly described herein, but may include various effects that may be understood or derived from the technical features of the present disclosure.

### Brief Description of Drawings

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows another example of wireless devices to which implementations of the present disclosure is applied.
FIG. 5 shows an example of UE to which implementations of the present disclosure is applied.
FIGs. 6 and 7 show an example of protocol stacks in a 3GPP based wireless communication system to which implementations of the present disclosure is applied.
FIG. 8 shows a frame structure in a 3GPP based wireless communication system to which implementations of the present disclosure is applied.
FIG. 9 shows a data flow example in the 3GPP NR system to which implementations of the present disclosure is applied.
FIG. 10 shows an example of an MTRP based communication according to an embodiment of the present disclosure.
FIG. 11 shows an example of a handover procedure to which technical features of the present disclosure can be applied.
FIG. 12 shows an example of a method performed by a UE according to an embodiment of the present disclosure.
FIG. 13 shows an example of a method performed by a network node according to an embodiment of the present disclosure.
FIG. 14 shows an example of a method for connection failure recovery via non-serving cell without configuration for mobility according to an embodiment of the present disclosure.
FIG. 15 shows an example of a method for connection failure recovery via non-serving cell with configuration for mobility according to an embodiment of the present disclosure.
FIG. 16 shows an example of a method for connection failure recovery on PCell via SCell without configuration for mobility according to an embodiment of the present disclosure.
FIG. 17 shows an example of a method for connection failure recovery on PCell via SCell with configuration for mobility according to an embodiment of the present disclosure.

### Mode for the Invention

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. LTE-advanced (LTE-A) is an evolved version of 3GPP LTE.

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/ B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Throughout the disclosure, the terms 'radio access network (RAN) node', 'base station', 'eNB', 'gNB' and 'cell' may be used interchangeably. Further, a UE may be a kind of a wireless device, and throughout the disclosure, the terms 'UE' and 'wireless device' may be used interchangeably.

Throughout the disclosure, the terms 'cell quality', 'signal strength', 'signal quality', 'channel state', 'channel quality', ' channel state/reference signal received power (RSRP)' and ' reference signal received quality (RSRQ)' may be used interchangeably.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

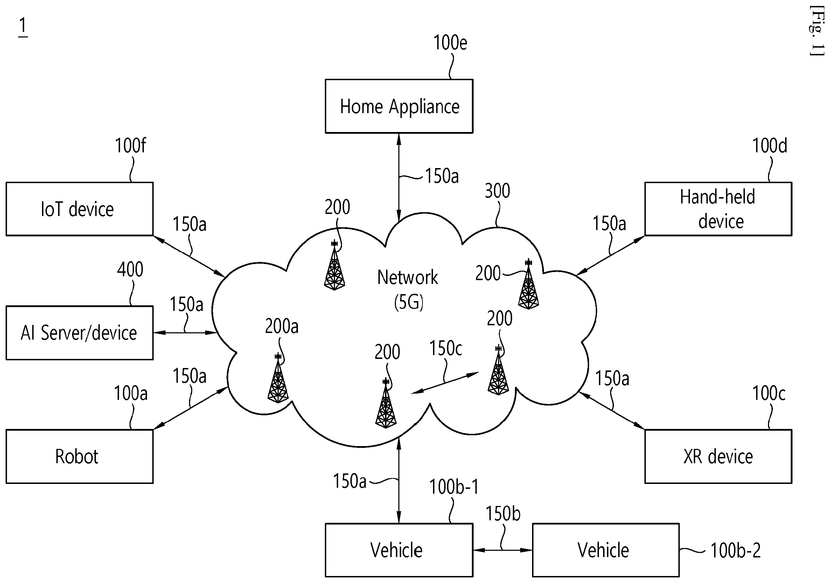

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

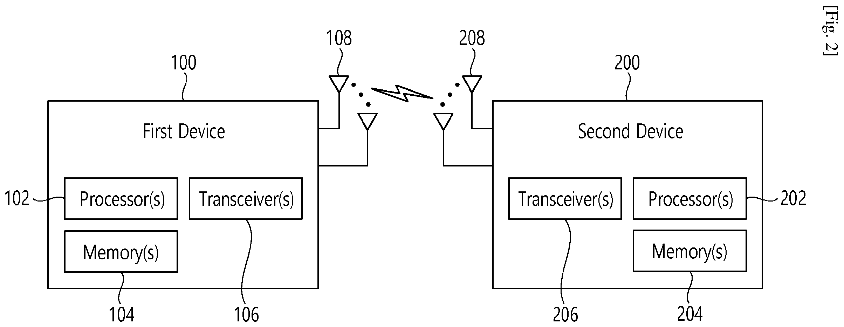

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR). In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include one or more processors 102 and one or more memories 104 and additionally further include one or more transceivers 106 and/ or one or more antennas 108. The processor(s) 102 may control the memory(s) 104 and/or the transceiver(s) 106 and may be configured to implement the descriptions, functions, procedures, suggestions, methods and/or operational flowcharts described in the present disclosure. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, suggestions, methods and/or operational flowcharts described in the present disclosure. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with radio frequency (RF) unit(s). In the present disclosure, the first wireless device 100 may represent a communication modem/circuit/chip.

The second wireless device 200 may include one or more processors 202 and one or more memories 204 and additionally further include one or more transceivers 206 and/ or one or more antennas 208. The processor(s) 202 may control the memory(s) 204 and/or the transceiver(s) 206 and may be configured to implement the descriptions, functions, procedures, suggestions, methods and/or operational flowcharts described in the present disclosure. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, suggestions, methods and/or operational flowcharts described in the present disclosure. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas may be a plurality of physical antennas or a plurality of logical antennas (e.g., antenna ports).

The one or more transceivers 106 and 206 may convert received radio signals/ channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the transceivers 106 and 206 can up-convert OFDM baseband signals to a carrier frequency by their (analog) oscillators and/or filters under the control of the processors 102 and 202 and transmit the up-converted OFDM signals at the carrier frequency. The transceivers 106 and 206 may receive OFDM signals at a carrier frequency and down-convert the OFDM signals into OFDM baseband signals by their (analog) oscillators and/or filters under the control of the transceivers 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

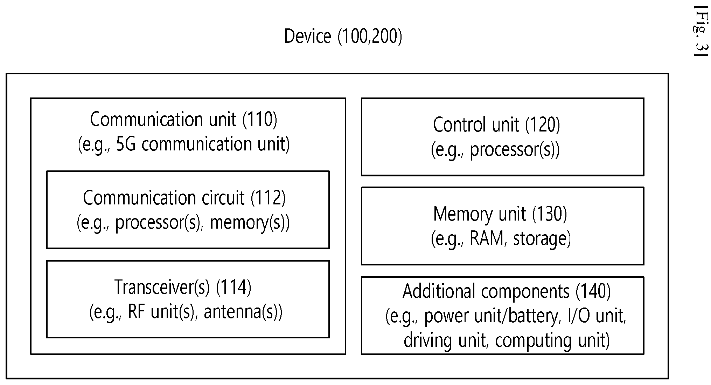

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory 130 may be configured by a RAM, a DRAM, a ROM, a flash memory, a volatile memory, a non-volatile memory, and/or a combination thereof.

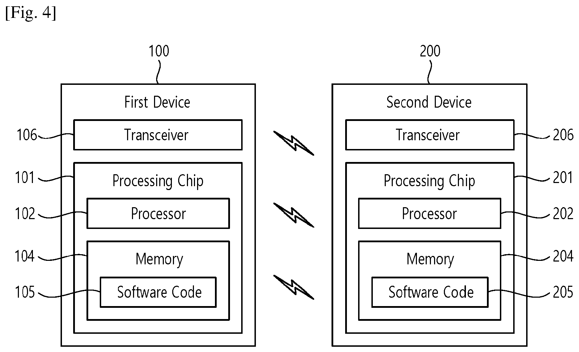

FIG. 4 shows another example of wireless devices to which implementations of the present disclosure is applied.

Referring to FIG. 4, wireless devices 100 and 200 may correspond to the wireless devices 100 and 200 of FIG. 2 and may be configured by various elements, components, units/portions, and/or modules.

The first wireless device 100 may include at least one transceiver, such as a transceiver 106, and at least one processing chip, such as a processing chip 101. The processing chip 101 may include at least one processor, such a processor 102, and at least one memory, such as a memory 104. The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 may perform one or more layers of the radio interface protocol.

The second wireless device 200 may include at least one transceiver, such as a transceiver 206, and at least one processing chip, such as a processing chip 201. The processing chip 201 may include at least one processor, such a processor 202, and at least one memory, such as a memory 204. The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 may perform one or more layers of the radio interface protocol.

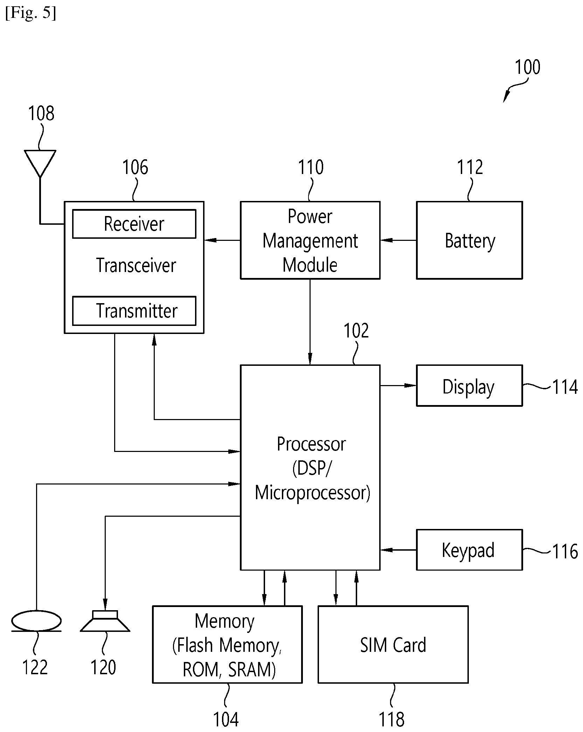

FIG. 5 shows an example of UE to which implementations of the present disclosure is applied.

Referring to FIG. 5, a UE 100 may correspond to the first wireless device 100 of FIG. 2 and/or the first wireless device 100 of FIG. 4.

A UE 100 includes a processor 102, a memory 104, a transceiver 106, one or more antennas 108, a power management module 110, a battery 1112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/ or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 16 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

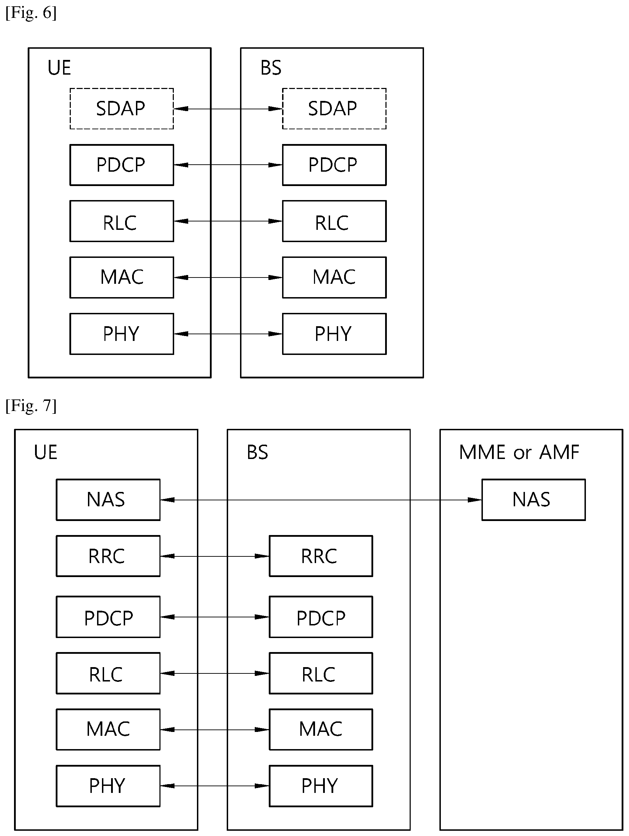

FIGs. 6 and 7 show an example of protocol stacks in a 3GPP based wireless communication system to which implementations of the present disclosure is applied.

In particular, FIG. 6 illustrates an example of a radio interface user plane protocol stack between a UE and a BS and FIG. 7 illustrates an example of a radio interface control plane protocol stack between a UE and a BS. The control plane refers to a path through which control messages used to manage call by a UE and a network are transported. The user plane refers to a path through which data generated in an application layer, for example, voice data or Internet packet data are transported. Referring to FIG. 6, the user plane protocol stack may be divided into Layer 1 (i.e., a PHY layer) and Layer 2. Referring to FIG. 7, the control plane protocol stack may be divided into Layer 1 (i.e., a PHY layer), Layer 2, Layer 3 (e.g., an RRC layer), and a non-access stratum (NAS) layer. Layer 1, Layer 2 and Layer 3 are referred to as an access stratum (AS).

In the 3GPP LTE system, the Layer 2 is split into the following sublayers: MAC, RLC, and PDCP. In the 3GPP NR system, the Layer 2 is split into the following sublayers: MAC, RLC, PDCP and SDAP. The PHY layer offers to the MAC sublayer transport channels, the MAC sublayer offers to the RLC sublayer logical channels, the RLC sublayer offers to the PDCP sublayer RLC channels, the PDCP sublayer offers to the SDAP sublayer radio bearers. The SDAP sublayer offers to 5G core network quality of service (QoS) flows.

In the 3GPP NR system, the main services and functions of the MAC sublayer include: mapping between logical channels and transport channels; multiplexing/ de-multiplexing of MAC SDUs belonging to one or different logical channels into/ from transport blocks (TB) delivered to/from the physical layer on transport channels; scheduling information reporting; error correction through hybrid automatic repeat request (HARQ) (one HARQ entity per cell in case of carrier aggregation (CA)); priority handling between UEs by means of dynamic scheduling; priority handling between logical channels of one UE by means of logical channel prioritization; padding. A single MAC entity may support multiple numerologies, transmission timings and cells. Mapping restrictions in logical channel prioritization control which numerology(ies), cell(s), and transmission timing(s) a logical channel can use.

Different kinds of data transfer services are offered by MAC. To accommodate different kinds of data transfer services, multiple types of logical channels are defined, i.e., each supporting transfer of a particular type of information. Each logical channel type is defined by what type of information is transferred. Logical channels are classified into two groups: control channels and traffic channels. Control channels are used for the transfer of control plane information only, and traffic channels are used for the transfer of user plane information only. Broadcast control channel (BCCH) is a downlink logical channel for broadcasting system control information, paging control channel (PCCH) is a downlink logical channel that transfers paging information, system information change notifications and indications of ongoing public warning service (PWS) broadcasts, common control channel (CCCH) is a logical channel for transmitting control information between UEs and network and used for UEs having no RRC connection with the network, and dedicated control channel (DCCH) is a point-to-point bi-directional logical channel that transmits dedicated control information between a UE and the network and used by UEs having an RRC connection. Dedicated traffic channel (DTCH) is a point-to-point logical channel, dedicated to one UE, for the transfer of user information. A DTCH can exist in both uplink and downlink. In downlink, the following connections between logical channels and transport channels exist: BCCH can be mapped to broadcast channel (BCH); BCCH can be mapped to downlink shared channel (DL-SCH); PCCH can be mapped to paging channel (PCH); CCCH can be mapped to DL-SCH; DCCH can be mapped to DL-SCH; and DTCH can be mapped to DL-SCH. In uplink, the following connections between logical channels and transport channels exist: CCCH can be mapped to uplink shared channel (UL-SCH); DCCH can be mapped to UL-SCH; and DTCH can be mapped to UL-SCH.

The RLC sublayer supports three transmission modes: transparent mode (TM), unacknowledged mode (UM), and acknowledged node (AM). The RLC configuration is per logical channel with no dependency on numerologies and/or transmission durations. In the 3GPP NR system, the main services and functions of the RLC sublayer depend on the transmission mode and include: transfer of upper layer PDUs; sequence numbering independent of the one in PDCP (UM and AM); error correction through ARQ (AM only); segmentation (AM and UM) and re-segmentation (AM only) of RLC SDUs; reassembly of SDU (AM and UM); duplicate detection (AM only); RLC SDU discard (AM and UM); RLC re-establishment; protocol error detection (AM only).

In the 3GPP NR system, the main services and functions of the PDCP sublayer for the user plane include: sequence numbering; header compression and decompression using robust header compression (ROHC); transfer of user data; reordering and duplicate detection; in-order delivery; PDCP PDU routing (in case of split bearers); retransmission of PDCP SDUs; ciphering, deciphering and integrity protection; PDCP SDU discard; PDCP re-establishment and data recovery for RLC AM; PDCP status reporting for RLC AM; duplication of PDCP PDUs and duplicate discard indication to lower layers. The main services and functions of the PDCP sublayer for the control plane include: sequence numbering; ciphering, deciphering and integrity protection; transfer of control plane data; reordering and duplicate detection; in-order delivery; duplication of PDCP PDUs and duplicate discard indication to lower layers.

In the 3GPP NR system, the main services and functions of SDAP include: mapping between a QoS flow and a data radio bearer; marking QoS flow ID (QFI) in both DL and UL packets. A single protocol entity of SDAP is configured for each individual PDU session.

In the 3GPP NR system, the main services and functions of the RRC sublayer include: broadcast of system information related to AS and NAS; paging initiated by 5GC or NG-RAN; establishment, maintenance and release of an RRC connection between the UE and NG-RAN; security functions including key management; establishment, configuration, maintenance and release of signaling radio bearers (SRBs) and data radio bearers (DRBs); mobility functions (including: handover and context transfer, UE cell selection and reselection and control of cell selection and reselection, inter-RAT mobility); QoS management functions; UE measurement reporting and control of the reporting; detection of and recovery from radio link failure; NAS message transfer to/from NAS from/to UE.

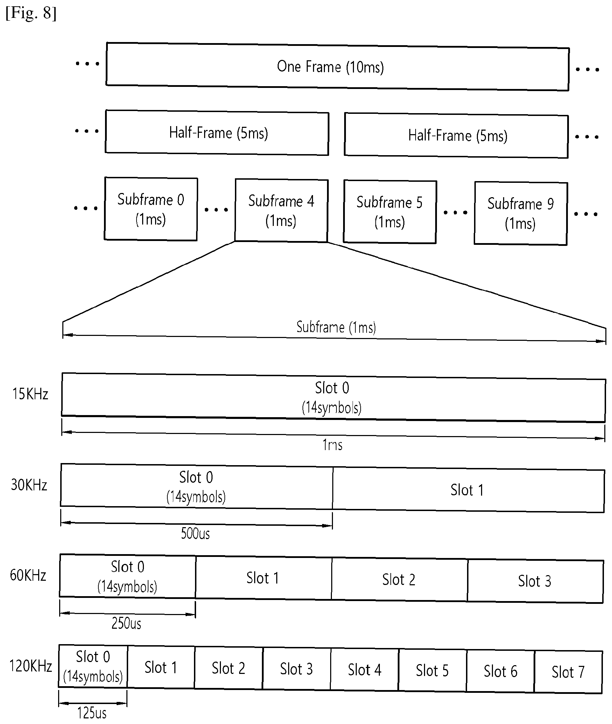

FIG. 8 shows a frame structure in a 3GPP based wireless communication system to which implementations of the present disclosure is applied.

The frame structure shown in FIG. 8 is purely exemplary and the number of subframes, the number of slots, and/or the number of symbols in a frame may be variously changed. In the 3GPP based wireless communication system, OFDM numerologies (e.g., subcarrier spacing (SCS), transmission time interval (TTI) duration) may be differently configured between a plurality of cells aggregated for one UE. For example, if a UE is configured with different SCSs for cells aggregated for the cell, an (absolute time) duration of a time resource (e.g., a subframe, a slot, or a TTI) including the same number of symbols may be different among the aggregated cells. Herein, symbols may include OFDM symbols (or CP-OFDM symbols), SC-FDMA symbols (or discrete Fourier transform-spread-OFDM (DFT-s-OFDM) symbols).

Referring to FIG. 8, downlink and uplink transmissions are organized into frames. Each frame has T_{f} = 10ms duration. Each frame is divided into two half-frames, where each of the half-frames has 5ms duration. Each half-frame consists of 5 subframes, where the duration T_{sf} per subframe is 1ms. Each subframe is divided into slots and the number of slots in a subframe depends on a subcarrier spacing. Each slot includes 14 or 12 OFDM symbols based on a cyclic prefix (CP). In a normal CP, each slot includes 14 OFDM symbols and, in an extended CP, each slot includes 12 OFDM symbols. The numerology is based on exponentially scalable subcarrier spacing βf = 2^{u}*15 kHz.

Table 1 shows the number of OFDM symbols per slot N^{slot}_{symb}, the number of slots per frame N^{frame,u}ₛₗₒₜ, and the number of slots per subframe N^{subframe,u}ₛₗₒₜ for the normal CP, according to the subcarrier spacing βf = 2^{u}*15 kHz.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows the number of OFDM symbols per slot N^{slot}_{symb}, the number of slots per frame N^{frame,u}ₛₗₒₜ, and the number of slots per subframe N^{subframe,u}ₛₗₒₜ for the extended CP, according to the subcarrier spacing βf = 2^{u}*15 kHz.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

A slot includes plural symbols (e.g., 14 or 12 symbols) in the time domain. For each numerology (e.g., subcarrier spacing) and carrier, a resource grid of N^{size,u}_{grid,x}**N*^{RB}_{sc} subcarriers and *N*^{subframe,u}_{symb} OFDM symbols is defined, starting at common resource block (CRB) *N*^{start,u}_{grid} indicated by higher-layer signaling (e.g., RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP based wireless communication system, *N*^{RB}_{sc} is 12 generally. There is one resource grid for a given antenna port *p,* subcarrier spacing configuration *u,* and transmission direction (DL or UL). The carrier bandwidth *N*^{size,u}_{grid} for subcarrier spacing configuration *u* is given by the higher-layer parameter (e.g., RRC parameter). Each element in the resource grid for the antenna port p and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the 3GPP based wireless communication system, an RB is defined by 12 consecutive subcarriers in the frequency domain. In the 3GPP NR system, RBs are classified into CRBs and physical resource blocks (PRBs). CRBs are numbered from 0 and upwards in the frequency domain for subcarrier spacing configuration *u.* The center of subcarrier 0 of CRB 0 for subcarrier spacing configuration *u* coincides with 'point A' which serves as a common reference point for resource block grids. In the 3GPP NR system, PRBs are defined within a bandwidth part (BWP) and numbered from 0 to *N*^{size}_{BWP,i}-1, where i is the number of the bandwidth part. The relation between the physical resource block n_{PRB} in the bandwidth part i and the common resource block n_{CRB} is as follows: n_{CRB} = n_{CRB} + *N*^{size}_{BWP,i}, where N^{size}_{BWP,i} is the common resource block where bandwidth part starts relative to CRB 0. The BWP includes a plurality of consecutive RBs. A carrier may include a maximum of N (e.g., 5) BWPs. A UE may be configured with one or more BWPs on a given component carrier. Only one BWP among BWPs configured to the UE can active at a time. The active BWP defines the UE's operating bandwidth within the cell's operating bandwidth.

The NR frequency band may be defined as two types of frequency range, i.e., FR1 and FR2. The numerical value of the frequency range may be changed. For example, the frequency ranges of the two types (FR1 and FR2) may be as shown in Table 3 below. For ease of explanation, in the frequency ranges used in the NR system, FR1 may mean "sub 6 GHz range", FR2 may mean "above 6 GHz range," and may be referred to as millimeter wave (mmW).

**[Table 3]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 4 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 4]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In the present disclosure, the term "cell" may refer to a geographic area to which one or more nodes provide a communication system, or refer to radio resources. A "cell" as a geographic area may be understood as coverage within which a node can provide service using a carrier and a "cell" as radio resources (e.g., time-frequency resources) is associated with bandwidth which is a frequency range configured by the carrier. The "cell" associated with the radio resources is defined by a combination of downlink resources and uplink resources, for example, a combination of a DL component carrier (CC) and a UL CC. The cell may be configured by downlink resources only, or may be configured by downlink resources and uplink resources. Since DL coverage, which is a range within which the node is capable of transmitting a valid signal, and UL coverage, which is a range within which the node is capable of receiving the valid signal from the UE, depends upon a carrier carrying the signal, the coverage of the node may be associated with coverage of the "cell" of radio resources used by the node. Accordingly, the term "cell" may be used to represent service coverage of the node sometimes, radio resources at other times, or a range that signals using the radio resources can reach with valid strength at other times.In CA, two or more CCs are aggregated. A UE may simultaneously receive or transmit on one or multiple CCs depending on its capabilities. CA is supported for both contiguous and non-contiguous CCs. When CA is configured, the UE only has one RRC connection with the network. At RRC connection establishment/re-establishment/handover, one serving cell provides the NAS mobility information, and at RRC connection re-establishment/handover, one serving cell provides the security input. This cell is referred to as the primary cell (PCell). The PCell is a cell, operating on the primary frequency, in which the UE either performs the initial connection establishment procedure or initiates the connection re-establishment procedure. Depending on UE capabilities, secondary cells (SCells) can be configured to form together with the PCell a set of serving cells. An SCell is a cell providing additional radio resources on top of special cell (SpCell). The configured set of serving cells for a UE therefore always consists of one PCell and one or more SCells. For dual connectivity (DC) operation, the term SpCell refers to the PCell of the master cell group (MCG) or the primary SCell (PSCell) of the secondary cell group (SCG). An SpCell supports PUCCH transmission and contention-based random access, and is always activated. The MCG is a group of serving cells associated with a master node, comprised of the SpCell (PCell) and optionally one or more SCells. The SCG is the subset of serving cells associated with a secondary node, comprised of the PSCell and zero or more SCells, for a UE configured with DC. For a UE in RRC_CONNECTED not configured with CA/DC, there is only one serving cell comprised of the PCell. For a UE in RRC_CONNECTED configured with CA/DC, the term "serving cells" is used to denote the set of cells comprised of the SpCell(s) and all SCells. In DC, two MAC entities are configured in a UE: one for the MCG and one for the SCG.

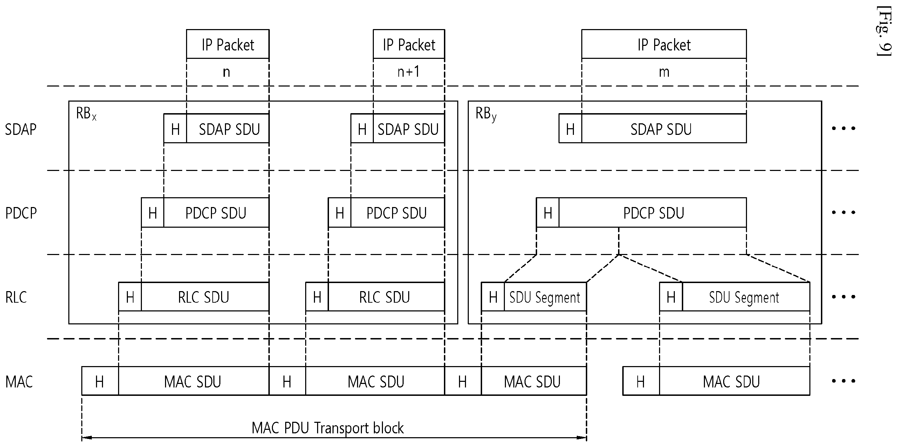

FIG. 9 shows a data flow example in the 3GPP NR system to which implementations of the present disclosure is applied.

Referring to FIG. 9, "RB" denotes a radio bearer, and "H" denotes a header. Radio bearers are categorized into two groups: DRBs for user plane data and SRBs for control plane data. The MAC PDU is transmitted/received using radio resources through the PHY layer to/from an external device. The MAC PDU arrives to the PHY layer in the form of a transport block.

In the PHY layer, the uplink transport channels UL-SCH and RACH are mapped to their physical channels physical uplink shared channel (PUSCH) and physical random access channel (PRACH), respectively, and the downlink transport channels DL-SCH, BCH and PCH are mapped to physical downlink shared channel (PDSCH), physical broadcast channel (PBCH) and PDSCH, respectively. In the PHY layer, uplink control information (UCI) is mapped to physical uplink control channel (PUCCH), and downlink control information (DCI) is mapped to physical downlink control channel (PDCCH). A MAC PDU related to UL-SCH is transmitted by a UE via a PUSCH based on an UL grant, and a MAC PDU related to DL-SCH is transmitted by a BS via a PDSCH based on a DL assignment.

Hereinafter, contents regarding a multiple transmit/receive point (multi-TRP or MTRP) are described.

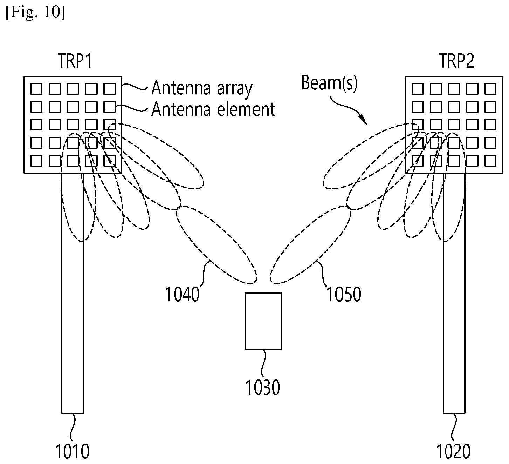

FIG. 10 shows an example of an MTRP based communication according to an embodiment of the present disclosure.

Referring to FIG. 10, UE 1030 is connected to a network via MTRP including TRP1 1010 and TRP2 1020. Each TRP may form a plurality of beams, and communicate with the UE 1030 via one or more of the plurality of beams. For example, TRP1 1010 may communicate with the UE 1030 via a beam 1040 among a plurality of beams formed by the TRP1 1010, and TRP2 1020 may communicate with the UE 1030 via a beam 1050 among a plurality of beams formed by the TRP2 1020.

A beam may formed by a radiation from a plurality of antenna elements in an antenna array of a TRP. The antenna array and/or at least one antenna element may be related to one or more antenna ports. An antenna port may be defined such that the channel over which a symbol on the antenna port is conveyed can be inferred from the channel over which another symbol on the same antenna port is conveyed. That is, the antenna port is a logical concept, and the channel that is transmitted by a specific antenna port can be done by using a reference signal assigned for the specific antenna port. This means that each antenna port has its own reference signal.

The beam may be represented as a quasi co-location (QCL) information and/or a transmission configuration indication (TCI) state. Two antenna ports are said to be quasi co-located (QCL'ed) if properties of the channel over which a symbol on one antenna port is conveyed can be inferred from the channel over which a symbol on the other antenna port is conveyed. For example, when an antenna port associated with a reference signal and an antenna port on which a symbol is conveyed over a channel are QCL'ed (i.e., the reference signal and the channel are QCL'ed or the channel is QCL'ed with the reference signal), the reference signal and the channel are assumed to be transmitted/received using the same beam. In this case, QCL information for the channel may be the reference signal and/or a beam corresponding to the reference signal, and TCI state of the channel may indicate the QCL information for the channel. In conclusion, beam/TCI(or TCI state)/QCL(or QCL information) may have the same meaning and may be used interchangeably.

In MTRP operation, a serving cell can schedule the UE from two TRPs, providing better coverage, reliability and/or data rates for PDSCH, PDCCH, PUSCH, and PUCCH.

There are two different operation modes to schedule multi-TRP PDSCH transmissions: single-DCI and multi-DCI. For both modes, control of uplink and downlink operation can be done by physical layer and MAC layer, within the configuration provided by the RRC layer. In single-DCI mode, the UE is scheduled by the same DCI for both TRPs and in multi-DCI mode, the UE is scheduled by independent DCIs from each TRP.

There are two different operation modes for multi-TRP PDCCH: PDCCH repetition and SFN based PDCCH transmission. In both modes, the UE can receive two PDCCH transmissions, one from each TRP, carrying the same DCI. In PDCCH repetition mode, the UE can receive the two PDCCH transmissions carrying the same DCI from two linked search spaces each associated with a different CORESET. In SFN based PDCCH transmission mode, the UE can receive the two PDCCH transmissions carrying the same DCI from a single search space/CORESET using different TCI states.

For multi-TRP PUSCH repetition, according to indications in a single DCI or in a semi-static configured grant provided over RRC, the UE performs PUSCH transmission of the same contents toward two TRPs with corresponding beam directions associated with different spatial relations. For multi-TRP PUCCH repetition, the UE performs PUCCH transmission of the same contents toward two TRPs with corresponding beam directions associated with different spatial relations.

For inter-cell multi-TRP operation, for multi-DCI PDSCH transmission, one or more TCI states can be associated with SSB with a PCI different from the serving cell PCI. The activated TCI states can be associated with at most one PCI different from the serving cell PCI at a time.

Hereinafter, UE-based mobility (e.g., conditional mobility) is described.

The UE-based mobility or conditional mobility is a connected mode mobility in which a network configures a UE with a plurality of candidate cells for mobility, and the UE determines a target cell for mobility which satisfies a mobility execution condition among the plurality of candidate cells. The candidate cells may be a subset of neighbor cells around the UE.

For example, in the UE-based mobility, the UE may receive a message (e.g., *conditionalReconfiguration* message/*RRCReconfiguration* message) including a plurality of conditional mobility commands from a source RAN node. Each conditional mobility command may be related to a corresponding candidate cell, and comprise an identity of the conditional mobility command, a mobility execution condition for the corresponding candidate cell, and/or a target cell configuration (or, candidate cell configuration) for the corresponding candidate cell.

The mobility execution condition for a candidate cell may comprise at least one of:
- an event A1 condition that a cell quality of the source/serving cell is higher than a threshold;
- an event A2 condition that a cell quality of the source/serving cell is lower than a threshold;
- an event A3 condition that a cell quality of the source/serving cell is higher than that of the candidate cell by an offset for at least a time-to-trigger (TTT) duration;
- an event A4 condition that a cell quality of the candidate cell is higher than a threshold; or
- an event A5 condition that a cell quality of the source/serving cell is lower than a serving cell threshold and a cell quality of the candidate cell is higher than a neighbor cell threshold for at least a TTT duration.

The target cell configuration for a candidate cell may comprise access information for accessing to the candidate cell (e.g., random access configuration including dedicated random access preamble(s) used for random access towards the candidate cell). The target cell configuration may be a kind of *RRCReconfiguration* message.

After receiving the plurality of conditional mobility commands, the UE may evaluate mobility execution condition(s) for the candidate cells (i.e., determine whether the mobility execution condition(s) is satisfied for the candidate cells) based on a result of measurement on the candidate cells. If a candidate cell satisfies the mobility execution condition, the UE may consider the candidate cell as a target cell for mobility, and perform a mobility to the target cell based on a conditional mobility command related to the target cell. The UE may access to the target cell by applying a target cell configuration for the target cell in the conditional mobility command.

For example, the UE-based mobility may comprise at least one of conditional PCell change (i.e., conditional handover), conditional PSCell addition (i.e., conditional SN addition) or conditional PSCell change (i.e., conditional SN change).

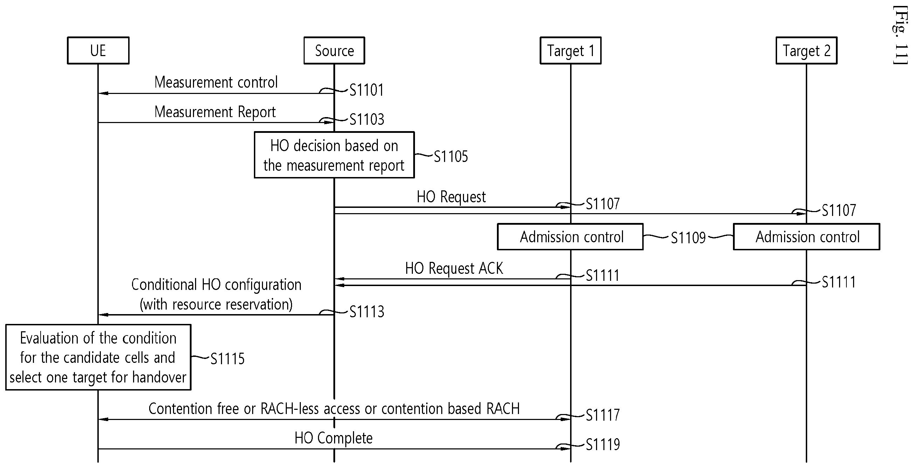

FIG. 11 shows an example of a handover procedure to which technical features of the present disclosure can be applied. FIG. 11 illustrates steps for the conditional handover procedure exemplary, but the illustrated steps can also be applied to a conditional mobility procedure (e.g., conditional SN addition procedure and/or conditional SN change procedure).

Referring to FIG. 11, in step S1101, the source RAN node may transmit measurement control message to the UE. The source RAN node may configure the UE measurement procedures according to the roaming and access restriction information and, for example, the available multiple frequency band information through the measurement control message. Measurement control information provided by the source RAN node through the measurement control message may assist the function controlling the UE's connection mobility. For example, the measurement control message may comprise measurement configuration and/or report configuration.

In step S1103, the UE may transmit a measurement report message to the source RAN node. The measurement report message may comprise a result of measurement on neighbor cell(s) around the UE which can be detected by the UE. The UE may generate the measurement report message according to a measurement configuration and/or measurement control information in the measurement control message received in step S1101.

In step S1105, the source RAN node may make a handover (HO) decision based on the measurement report. For example, the source RAN node may make a HO decision and determine candidate target RAN nodes (e.g., cell quality, signal quality, signal strength, reference signal received power (RSRP), reference signal received quality (RSRP), channel state, channel quality, signal to interference plus noise ratio (SINR)) on the neighbor cells.

In step S1107, the source RAN node may transmit HO request messages to the target RAN node 1 and the target RAN node 2 which are determined in step S1105. That is, the source RAN node may perform handover preparation with the target RAN node 1 and the target RAN node 2. The HO request message may comprise necessary information to prepare the handover at the target side (e.g., target RAN node 1 and target RAN node 2).

In step S1109, each of the target RAN node 1 and the target RAN node 2 may perform an admission control based on information included in the HO request message. The target RAN node may configure and reserve the required resources (e.g., C-RNTI and/or RACH preamble). The AS-configuration to be used in the target RAN node can either be specified independently (i.e. an "establishment") or as a delta compared to the AS-configuration used in the source RAN node (i.e. a "reconfiguration").

In step S1111, the target RAN node 1 and the target RAN node 2 may transmit a HO request acknowledge (ACK) message to the source RAN node. The HO request ACK message may comprise information on resources reserved and prepared for a handover. For example, the HO request ACK message may comprise a transparent container to be sent to the UE as an RRC message to perform the handover. The container may include a new C-RNTI, target gNB security algorithm identifiers for the selected security algorithms, a dedicated RACH preamble, and/or possibly some other parameters i.e. access parameters, SIBs. If RACH-less handover is configured, the container may include timing adjustment indication and optionally a preallocated uplink grant. The HO request ACK message may also include RNL/TNL information for forwarding tunnels, if necessary. As soon as the source RAN node receives the HO request ACK message, or as soon as the transmission of the handover command is initiated in the downlink, data forwarding may be initiated.

In step S1113, the source RAN node may transmit a conditional HO (CHO) configuration to the UE. The CHO configuration may be also referred to as conditional reconfiguration. The CHO configuration may comprise a CHO configuration for each of the candidate target RAN nodes (e.g., target RAN node 1, target RAN node 2). For example, the CHO configuration may comprise a CHO configuration for the target RAN node 1, and a CHO configuration for the target RAN node 2. The CHO configuration for the target RAN node 1 may comprise a handover condition for the target RAN node 1, and a handover command of the target RAN node 1. The handover command of the target RAN node 1 may comprise RRC reconfiguration parameters for a handover to the target RAN node 1, including information on resources reserved for the handover to the target RAN node 1. Similarly, the CHO configuration for the target RAN node 2 may comprise a handover condition for the target RAN node 2, and a handover command of the target RAN node 2. The handover command of the target RAN node 2 may comprise RRC reconfiguration parameters for a handover to the target RAN node 2, including information on resources reserved for the handover to the target RAN node 2.

In step S1115, the UE may perform an evaluation of the handover condition for the candidate target RAN nodes (e.g., target RAN node 1, target RAN node 2) and select a target RAN node for handover among the candidate target RAN nodes. For example, the UE may perform measurements on the candidate target RAN nodes, and determine whether a candidate target RAN node satisfies a handover condition for the candidate target RAN node among the candidate target RAN nodes based on a result of the measurements on the candidate target RAN nodes. If the UE identifies that the target RAN node 1 satisfies a handover condition for the target RAN node 1, the UE may select the target RAN node 1 as a target RAN node for the handover.

In step S1117, the UE may perform a random access to the selected target RAN node (e.g., target RAN node 1). For example, the UE may transmit a random access preamble to the target RAN node 1, and receive a random access response comprising an uplink grant from the target RAN node 1. If RACH-less handover is configured, the step S1117 may be omitted, and the uplink grant may be provided in step S1113. The uplink grant may be used for the UE to transmit a HO complete message to the target RAN node 1.

In step S1119, the UE may transmit a HO complete message to the target RAN node 1. When the UE has successfully accessed the target RAN node 1 (or, received uplink grant when RACH-less HO is configured), the UE may transmit a HO complete message comprising a C-RNTI to confirm the handover, along with uplink buffer status report, whenever possible, to the target RAN node 1 to indicate that the handover procedure is completed for the UE. The target RAN node 1 may verify the C-RNTI transmitted in the HO complete message.

Hereinafter, radio link failure related actions are described.

To detect physical layer problems in RRC_CONNECTED, the UE shall:
1> if any DAPS bearer is configured, upon receiving N310 consecutive "out-of-sync" indications for the source SpCell from lower layers and T304 is running:
   2> start timer T310 for the source SpCell.
1> upon receiving N310 consecutive "out-of-sync" indications for the SpCell from lower layers while neither T300, T301, T304, T311, T316 nor T319 are running:
   2> start timer T310 for the corresponding SpCell.

Upon receiving N311 consecutive "in-sync" indications for the SpCell from lower layers while T310 is running, the UE shall:
1> stop timer T310 for the corresponding SpCell.
1> stop timer T312 for the corresponding SpCell, if running.

In this case, the UE may maintain the RRC connection without explicit signalling, i.e. the UE may maintain the entire radio resource configuration.

Periods in time where neither "in-sync" nor "out-of-sync" is reported by L1 do not affect the evaluation of the number of consecutive "in-sync" or "out-of-sync" indications.

Regarding a detection of a radio link failure (RLF) on a master cell group (MCG) including a PCell and optionally one or more SCells, the UE shall:
1> if any DAPS bearer is configured and T304 is running:
   2> upon T310 expiry in source SpCell; or
   2> upon random access problem indication from source MCG MAC; or
   2> upon indication from source MCG RLC that the maximum number of retransmissions has been reached; or
   2> upon consistent uplink LBT failure indication from source MCG MAC:
      3> consider radio link failure to be detected for the source MCG i.e. source RLF;
      3> suspend the transmission and reception of all DRBs in the source MCG;
      3> reset MAC for the source MCG;
      3> release the source connection.
1> else:
   2> during a DAPS handover: the following only applies for the target PCell;
   2> upon T310 expiry in PCell; or
   2> upon T312 expiry in PCell; or
   2> upon random access problem indication from MCG MAC while neither T300, T301, T304, T311 nor T319 are running; or
   2> upon indication from MCG RLC that the maximum number of retransmissions has been reached; or
   2> if connected as an IAB-node, upon BH RLF indication received on BAP entity from the MCG; or
   2> upon consistent uplink LBT failure indication from MCG MAC while T304 is not running:
      3> if the indication is from MCG RLC and CA duplication is configured and activated for MCG, and for the corresponding logical channel *allowedServingCells* only includes SCell(s):
         4> initiate the failure information procedure as specified in 5.7.5 to report RLC failure.
      3> else:
         4> consider radio link failure to be detected for the MCG, i.e. MCG RLF;
         4> discard any segments of segmented RRC messages;
         4> if AS security has not been activated:
            5> perform the actions upon going to RRC_IDLE, with release cause 'other';-
         4> else if AS security has been activated but SRB2 and at least one DRB or, for IAB, SRB2, have not been setup:
            5> store the radio link failure information in the *VarRLF-Report;*
            5> perform the actions upon going to RRC_IDLE, with release cause 'RRC connection failure';
         4> else:
            5> store the radio link failure information in the *VarRLF-Report;*
            5> if T316 is configured; and
            5> if SCG transmission is not suspended; and
            5> if PSCell change is not ongoing (i.e. timer T304 for the NR PSCell is not running in case of NR-DC or timer T307 of the E-UTRA PSCell is not running, in NE-DC):
               6> initiate the MCG failure information procedure to report MCG radio link failure.
            5> else:
               6> initiate the connection re-establishment procedure.

The UE may discard the radio link failure information, i.e. release the UE variable VarRLF-Report, 48 hours after the radio link failure is detected.

Regarding a detection of an RLF on a secondary cell group (SCG) including a PSCell and optionally one or more SCells, the UE shall:
1> upon T310 expiry in PSCell; or
1> upon T312 expiry in PSCell; or
1> upon random access problem indication from SCG MAC; or
1> upon indication from SCG RLC that the maximum number of retransmissions has been reached; or
1> if connected as an IAB-node, upon BH RLF indication received on BAP entity from the SCG; or
1> upon consistent uplink LBT failure indication from SCG MAC:
   2> if the indication is from SCG RLC and CA duplication is configured and activated for SCG, and for the corresponding logical channel *allowedServingCells* only includes SCell(s):
      3> initiate the failure information procedure to report RLC failure.
   2> else:
      3> consider radio link failure to be detected for the SCG, i.e. SCG RLF;
      3> if MCG transmission is not suspended:
         4> initiate the SCG failure information procedure to report SCG radio link failure.
      3> else:
         4> if the UE is in NR-DC:
            5> initiate the connection re-establishment procedure;
         4> else (the UE is in (NG)EN-DC):
            5> initiate the connection re-establishment procedure.

Upon initiating the connection re-establishment procedure, the UE may perform a cell selection in accordance with a cell selection process to select a suitable cell. Upon selecting the suitable cell, the UE shall:
1> if the cell selection is triggered by detecting radio link failure of the MCG or reconfiguration with sync failure of the MCG, and
1> if *attemptCondReconfig* is configured; and
1> if the selected cell is one of the candidate cells for which the *reconfigurationWithSync* is included in the *masterCellGroup* in *VarConditionalReconfig* (i.e., if the selected cell is one of the candidate cells related to mobility commands received by the UE):
   2> apply the stored *condRRCReconfig* associated to the selected cell (i.e., apply the target cell configuration associated to the selected cell) and perform a conditional mobility to the selected cell.

Meanwhile, 3GPP has been developing NR features to satisfy various service requirements for not only voice service but also internet data services which are evolving in more diverse areas than LTE. For example, some convergence services, e.g. Artificial Intelligent (AI) based real-time service, are already focusing on the provision of new user experiences which require ultra-reliability with very high data speed.

In a move that could provide more reliable service, 3GPP has completed some mobility enhancements on NR. In detail, Conditional Handover (CHO), and Conditional PSCell Addition/Change (CPAC) has been specified to improve mobility robustness by cell selection which may be the best suitable for mobility.

However, in real deployment scenarios, the UE is still not free from concern on connection failure in spite of that there are some mobility enhancements reducing mobility failure rate during mobility procedures. For example, in the case that UE doesn't have any information for CHO or CPAC, another robustness mechanism to prevent connection failure can be required.

Moreover, especially in FR2 deployment scenarios, connection failure is more concern because the connection failure can frequently occur due to unreliable channel characteristics in FR2.

To remove those concern on connection failure regardless of CHO or CPAC, MTRP operations which include multi-TRP for multi-cell operations can be used for applying new cases for recovery from connection failure. Multi-cell MTRP operations may allow UE to utilize resources of both serving cell and non-serving cell.

If the UE's multi-connection capabilities are configured to use the multi-cell MTRP operations, dual connectivity (DC) configuration may be restricted/prohibited due to UE capability limitations and complexity. Hence, any mechanism for fast recovery from RLF based on DC may not be applicable to the multi-cell MTRP operations.

Therefore, in the present disclosure, upon detection of a radio link failure on a serving cell, the UE checks based on multi-TRP operation information, whether there is any available/suitable cell to perform connection failure recovery for the serving cell. If there is a cell to perform the connection failure recovery, the UE sends a recovery request to the cell for the connection failure recovery of the serving cell via multi-TRP operation.

To check whether there is an available/suitable cell to perform connection failure recovery, the UE may refer to the information of the multi-TRP operation as following procedures:
1) The serving cell, e.g. PCell or PSCell may provide multi-TRP operation information to the UE via RRC signalling, e.g. RRC Reconfiguration message. In the multi-TRP operation information, there may be multiple cell information i.e., a configuration for a list of cells. The list of cells may comprise other serving cells, SCells, and/or non-serving cells. For the cells in the multi-TRP operation information, multi-cell information, e.g. PCI, NR global cell identity (NCGI), or reference RS of each cell may be included. In the multi-TRP operation information, TCI state information for concerned physical channels can be included, and the association between TCI state information and cell information can be included.
2) After reception of the multi-TRP operation information, the UE may additionally select a TRP (e.g., transmission point or reception point) for data transmission not only on the serving cell, e.g. PCell, PSCell and/or SCell but also on other inter-cells (e.g., non-serving cells) according to the multi-TRP operation information.
3) The UE may perform link monitoring for the inter-cell and may know the signal quality of the inter-cell while transmitting data via multi-TRP operation. The UE may perform link monitoring of the inter-cell using the multi-cell information in the multi-TRP operation information. In detail, before the declaration of the radio link failure, the UE PHY may send one or more indications of the cell information to the UE RRC that the cell information informs which cells have good signal quality for multi-TRP operation. The cells indicated in the cell information may be available for both transmission and reception with the network. Also, the cells indicated in the cell information maybe just for one-way signalling, i.e. only for transmission to the network or only for reception from the network. That is, the UE may send a recovery request to a cell that is only available to send UL data and the UE may receive a response to the recovery request from another cell that is only available to receive DL data. The indication of the cell information from the UE PHY may be legacy signalling, e.g. out-of-sync indication.
4) Upon declaration of the radio link failure on the serving cell, the UE may check which inter cells are still good to transmit data via multi-TRP operation. Upon/after the declaration of the radio link failure, the UE PHY may send one or more indications of the cell information for recovery to the UE RRC that the cell information informs which cells have good signal quality for multi-TRP operation. For the case that the radio link failure is caused by other reasons except for out-of-sync (e.g. random access problem, RLC problem due to the maximum number of retransmissions, or LBT failure indication), the UE RRC may request to the UE PHY for the one or more indications of the cell information for recovery. The cells indicated in the cell information may be available for both transmission and reception with the network. Also, the cells indicated in the cell information may be just for one-way signalling, i.e. only for transmission to the network or only for reception from the network. That is, the UE may send a recovery request to a cell that is only available to send UL data and the UE may receive a response to the recovery request from another cell that is only available to receive DL data. The indication of the cell information from the UE PHY may be legacy signalling, e.g. in-sync indication.

To perform the connection failure recovery via multi-TRP operation on the available cell(s), the UE may perform at least one of the following procedures:
1) The UE may send a recovery request to one of the available cells which is available to send UL data via multi-TRP operation. UE may perform TCI state switching autonomously to a state that is associated with the cell/TRP that is used for sending the recovery request. After sending the recovery request, the UE may suspend all data transmission and wait for a response from the network. The response, e.g. RRC Reconfiguration message from the network may be provided by one of the available cells which is available to receive DL data via multi-TRP operation. To receive the response from the network, the UE may indicate another available cell in the recovery request as the reception point. After reception of the response from the network, the UE may apply the configuration in the response and resume the data transmission on the current serving cell.
2) If the serving cell had provided one or more mobility commands, e.g. conditional handover command or conditional PSCell addition/change command before the radio link failure, the UE may check whether the available cell to perform connection failure recovery for the serving cell is the target cell corresponding to the mobility commands. If the available cell to perform connection failure recovery for the serving cell is the target cell corresponding to the mobility commands, the UE may apply the mobility command for the available cell and may send a recovery request to the available cell to indicate that the UE performs mobility for connection failure recovery. For this case, the available cell may be limited to a cell that is available to bidirectional transmission between the network and the UE.

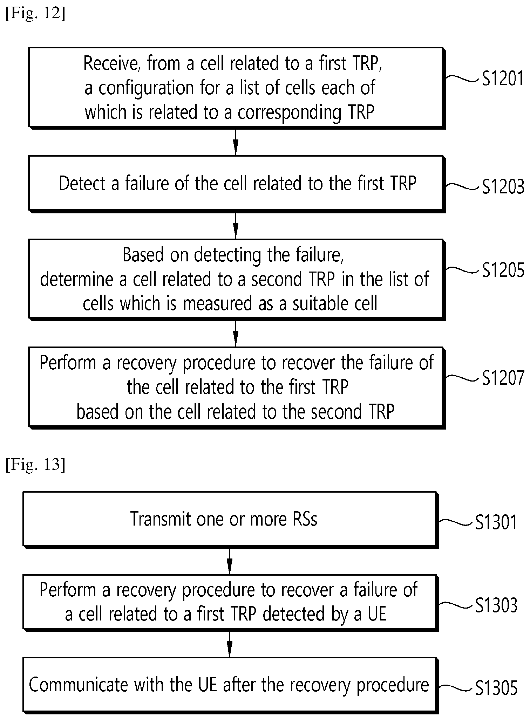

FIG. 12 shows an example of a method performed by a UE according to an embodiment of the present disclosure. The method may also be performed by a wireless device.

Referring to FIG. 12, in step S1201, the UE may receive, from a cell related to a first TRP, a configuration for a list of cells each of which is related to a corresponding TRP.

In step S1203, the UE may detect a failure of the cell related to the first TRP.

In step S1205, the UE may, based on detecting the failure, determine a cell related to a second TRP in the list of cells which is measured as a suitable cell.

In step S1207, the UE may perform a recovery procedure to recover the failure of the cell related to the first TRP based on the cell related to the second TRP.

According to various embodiments, the cell related to the first TRP may comprise at least one of a primary cell (PCell) or a primary secondary cell (PSCell). The cell related to the second TRP may comprise at least one of a non-serving cell or a secondary cell (SCell).

According to various embodiments, to perform the recovery procedure, the UE may transmit, to the cell related to the second TRP, a request message for a recovery of the failure of the cell related to the first TRP. The UE may receive, from a cell related to a third TRP, a response message for the request message. The response message may comprise a mobility command. The UE may perform a mobility to the cell related to the second TRP or the cell related to the third TRP based on the mobility command.

For example, the second TRP and the third TRP may be different from each other, and the cell related to the second TRP and the cell related to the third TRP may be different from each other.

For example, the second TRP and the third TRP may be the same, and the cell related to the second TRP and the cell related to the third TRP may be the same.

For example, the second TRP and the third TRP may be different from each other, but the cell related to the second TRP and the cell related to the third TRP may be the same.

For example, the second TRP and the third TRP may be the same, but the cell related to the second TRP and the cell related to the third TRP may be different from each other.

According to various embodiments, the request message may comprise an indication for the failure of the cell related to the first TRP.

According to various embodiments, the mobility command may comprise a random access configuration for a random access to the cell related to the second TRP. The UE may perform a random access to the cell related to the second TRP based on the random access configuration.

According to various embodiments, the UE may receive, from the cell related to the first TRP, a plurality of conditional mobility commands each of which is related to a corresponding target cell. The cell related to the second TRP may be a target cell related to one of the plurality of conditional mobility commands.

According to various embodiments, to perform the recovery procedure, the UE may perform a mobility to the cell related to the second TRP based on a mobility command for the target cell.

According to various embodiments, the UE may transmit, to the cell related to the second TRP, a request message for a recovery of the failure of the cell related to the first TRP. The UE may receive, from the cell related to the second TRP, a response message for the request message. The request message may comprise an indication that the UE performs the mobility for the recovery of the failure.

According to various embodiments, the response message may correspond to a radio resource control (RRC) reconfiguration message or an RRC release message.

According to various embodiments, the suitable cell may comprise a cell whose quality is higher than a threshold value. The quality may comprise at least one of a beam quality or a cell quality. The threshold value may comprise at least one of a preconfigured value or a value configured by a network.

According to various embodiments, the configuration may comprise a plurality of transmission configuration indication (TCI) states each of which is related to a corresponding cell in the list.

According to various embodiments, the UE may, after determining the cell related to the second TRP, identify a beam indicated by a TCI state for the cell related to the second TRP among the plurality of TCI states. To perform the recovery procedure, the UE may perform the recovery procedure for the cell related to the first TRP by using the beam for the cell related to the second TRP.

According to various embodiments, the UE may receive a configuration for multi-TRP operation of multi-cell from a first cell. The first cell may be a serving cell, and the configuration for the multi-TRP operation of multi-cell may provide cell identities for the multi-cell. The UE may transmit data using the configuration for the multi-TRP operation of multi-cell. The UE may, upon detection of RLF, send a request to a second cell to recover the RLF if the second cell is measured by the UE as a still suitable cell to transmit data after the RLF. The second cell may be a non-serving cell and one of the multi-cell for multi-TRP operation. The UE may receive a response from the second cell to recovery the RLF.

Furthermore, the method in perspective of the UE described above in FIG. 12 may be performed by first wireless device 100 shown in FIG. 2, the wireless device 100 shown in FIG. 3, the first wireless device 100 shown in FIG. 4 and/or the UE 100 shown in FIG. 5.

More specifically, the UE comprises at least one transceiver, at least processor, and at least one computer memory operably connectable to the at least one processor and storing instructions that, based on being executed by the at least one processor, perform operations.

The operations comprise: receiving, from a cell related to a first transmit/receive point (TRP), a configuration for a list of cells each of which is related to a corresponding TRP; detecting a failure of the cell related to the first TRP; based on detecting the failure, determining a cell related to a second TRP in the list of cells which is measured as a suitable cell; and performing a recovery procedure to recover the failure of the cell related to the first TRP based on the cell related to the second TRP.

Furthermore, the method in perspective of the UE described above in FIG. 12 may be performed by a software code 105 stored in the memory 104 included in the first wireless device 100 shown in FIG. 4.

More specifically, at least one computer readable medium (CRM) stores instructions that, based on being executed by at least one processor, perform operations comprising: receiving, from a cell related to a first transmit/receive point (TRP), a configuration for a list of cells each of which is related to a corresponding TRP; detecting a failure of the cell related to the first TRP; based on detecting the failure, determining a cell related to a second TRP in the list of cells which is measured as a suitable cell; and performing a recovery procedure to recover the failure of the cell related to the first TRP based on the cell related to the second TRP.

Furthermore, the method in perspective of the UE described above in FIG. 12 may be performed by control of the processor 102 included in the first wireless device 100 shown in FIG. 2, by control of the communication unit 110 and/or the control unit 120 included in the wireless device 100 shown in FIG. 3, by control of the processor 102 included in the first wireless device 100 shown in FIG. 4 and/or by control of the processor 102 included in the UE 100 shown in FIG. 5.

More specifically, an apparatus configured to operate in a wireless communication system (e.g., wireless device/UE) comprises at least processor, and at least one computer memory operably connectable to the at least one processor. The at least one processor is configured to perform operations comprising: receiving, from a cell related to a first transmit/receive point (TRP), a configuration for a list of cells each of which is related to a corresponding TRP; detecting a failure of the cell related to the first TRP; based on detecting the failure, determining a cell related to a second TRP in the list of cells which is measured as a suitable cell; and performing a recovery procedure to recover the failure of the cell related to the first TRP based on the cell related to the second TRP.

FIG. 13 shows an example of a method performed by a network node according to an embodiment of the present disclosure. The network node may include a second TRP. An example of the network node may be a BS.

Referring to FIG. 13, in step S1301, the network node may transmit one or more RSs.

In step S1303, the network node may perform a recovery procedure to recover a failure of a cell related to a first TRP detected by a UE.

In step S1305, the network node may communicate with the UE after the recovery procedure.

The one or more RSs may be used for the UE to determine a cell related to the second TRP in a list of cells which is measured as a suitable cell after detecting the failure. The list of cells may comprise cells each of which is related to a corresponding TRP. A configuration for the list of cells may be received by the UE from a cell related to the first TRP.

Furthermore, the method in perspective of the network node described above may be performed by second wireless device 100 shown in FIG. 2, the device 100 shown in FIG. 3, and/or the second wireless device 200 shown in FIG. 4.

More specifically, the network node comprises at least one transceiver, at least processor, and at least one computer memory operably connectable to the at least one processor and storing instructions that, based on being executed by the at least one processor, perform operations.

The operations comprise: transmitting one or more reference signals (RSs); performing a recovery procedure to recover a failure of a cell related to a first TRP detected by a user equipment (UE); and communicating with the UE after the recovery procedure. The one or more RSs may be used for the UE to determine a cell related to the second TRP in a list of cells which is measured as a suitable cell after detecting the failure. The list of cells may comprise cells each of which is related to a corresponding TRP. A configuration for the list of cells may be received by the UE from a cell related to the first TRP.

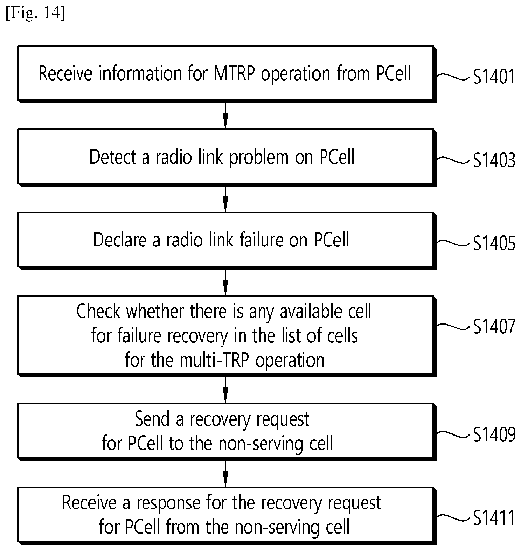

FIG. 14 shows an example of a method for connection failure recovery via non-serving cell without configuration for mobility according to an embodiment of the present disclosure. The method may be performed by a UE and/or a wireless device.

Referring to FIG. 14, in step S1401, the UE receives information for MTRP operation from PCell. After the establishment of RRC connection with PCell, PCell may send an RRC reconfiguration message including information for the multi-TRP operation. The information for the multi-TRP operation comprises multiple cell information i.e., configuration for a list of cells including SCells and/or non-serving cells, and cell information (e.g., PCI, NR global cell identity (NCGI), or reference RS of each cell).

After reception of the information for the multi-TRP operation, the UE performs link monitoring of the multiple cells in the multi-TRP operation information (i.e., information for the multi-TRP operation) and select additional TRP(s) including transmission points and/or reception points related to a cell among the multiple cells for data transmission according to the multi-TRP operation. The selected TRP including transmission point and/or reception point may be changed by a result of the link monitoring of the multiple cells.

In step S1403, the UE suffers a radio link problem on PCell. The UE RRC receives one or more out-of-sync indications from the UE PHY. In the out-of-sync indications, one or more cell information related to the list of cells for the multi-TRP operation are included for recovery. The cell information may comprise PCI and/or available TRP(s) including transmission/reception points.

In step S1405, the UE declares a radio link failure on PCell. Upon receiving N310 consecutive "out-of-sync" indications for PCell, the UE may start T310 timer. Upon expiry of T310, the UE may declare a radio link failure on PCell.

In step S1407, the UE may check whether there is any available cell for failure recovery in the list of cells for the multi-TRP operation. Based on the cell information received by out-of-sync indications from the UE PHY, the UE may check which inter cells (e.g., non-serving cells) are still good to transmit data via multi-TRP operation. From the out-of-sync indications, the UE selects a non-serving cell as an available cell for recovery.

In step S1409, the UE sends a recovery request for PCell to the non-serving cell. The UE may send a recovery request for PCell via the transmission point of the non-serving cell. The recovery request may indicate that the UE declared the radio link failure on PCell. The recovery request is supposed to be sent to PCell via the non-serving cell. After sending the recovery request, the UE may wait for a response for the recovery request via the non-serving cell.

In step S1411, the UE receives a response for the recovery request for PCell from the non-serving cell. The UE may receive a response for the recovery request for PCell via the reception point of the non-serving cell. The response may comprise an RRC Reconfiguration message from PCell. In the RRC Reconfiguration, there may be a mobility command, e.g. *reconfiguration with sync* to the non-serving cell. After reception of the response including the mobility command, the UE may perform a mobility to the non-serving cell.

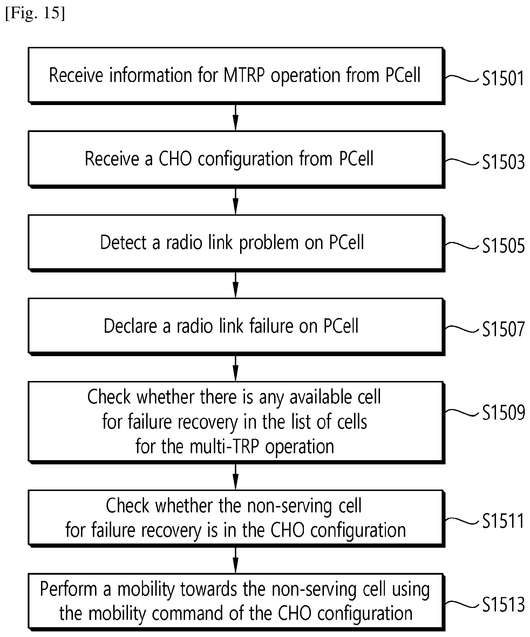

FIG. 15 shows an example of a method for connection failure recovery via non-serving cell with configuration for mobility according to an embodiment of the command for the non-serving cell. Optionally, the UE may send a recovery request to the non-serving cell to indicate that the UE performs mobility for connection failure recovery. The UE may receive a response for the recovery request as RRC Reconfiguration or RRC Release message.

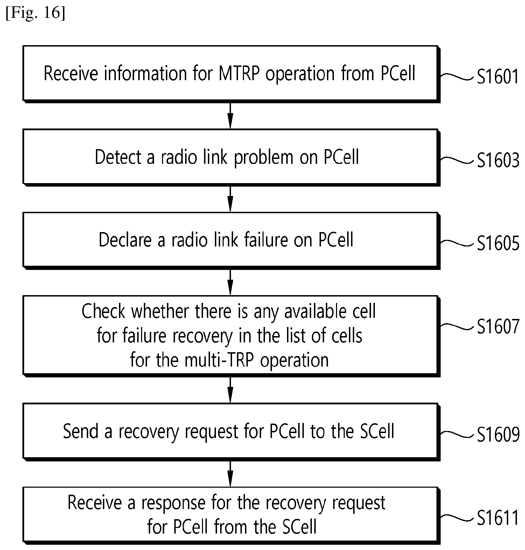

FIG. 16 shows an example of a method for connection failure recovery on PCell via SCell without configuration for mobility according to an embodiment of the present disclosure. The method may be performed by a UE and/or a wireless device.

Referring to FIG. 16, in step S1601, the UE may receive information for multi-TRP operation from PCell. After the establishment of RRC connection with PCell, PCell may send an RRC Reconfiguration message including information for the multi-TRP operation. The information for the multi-TRP operation may comprise multiple cell information i.e., configuration for a list of cells including SCells and/or non-serving cells, and cell information (e.g. PCI, NR global cell identity (NCGI), or reference RS of each cell).

After reception of the information for the multi-TRP operation, the UE may perform link monitoring of the multiple cells in the information for the multi-TRP operation and select additional TRP(s) including transmission points and/or reception points among the list of cells for data transmission according to the multi-TRP operation. The selected TRP including transmission point and/or reception point may be changed by a result of the link monitoring of the multiple cells.

In step S1603, the UE may suffer a radio link problem on PCell. The UE RRC may receive one or more out-of-sync indications from the UE PHY. In the out-of-sync indications, one or more cell information related to the list of cells for the multi-TRP operation is included for recovery. The cell information may comprise PCI and/or available TRP(s).

In step S1605, the UE may declare a radio link failure on PCell. Upon receiving N310 consecutive "out-of-sync" indications for PCell, the UE may start T310 timer. Upon expiry of T310, the UE may declare a radio link failure on PCell.

In step S1607, the UE may check whether there is any available cell for failure recovery among the list of cells for the multi-TRP operation. Based on the cell information received by out-of-sync indications from the UE PHY, the UE may check which inter cells are still good to transmit data via multi-TRP operation. From the out-of-sync indications, the UE may select an SCell as an available cell for recovery. For the SCell, the UE may have uplink configuration (e.g., PUCCH configuration) and related UL timing information (e.g., timing alignment information) for the SCell to transmit PUCCH to the network.

In step S1609, the UE may send a recovery request for the PCell to the SCell. The UE may send a recovery request for PCell via the transmission point of the SCell. The recovery request may indicate that the UE declared the radio link failure on PCell. The recovery request is supposed to be sent to PCell via the SCell. After sending the recovery request, the UE may wait for a response for the recovery request via the SCell.

In step S1611, the UE may receive a response for the recovery request for PCell from the SCell. The UE may receive a response for the recovery request for PCell via the reception point of the SCell. The response may comprise an RRC Reconfiguration message from PCell. In the RRC Reconfiguration, there may be a mobility command, e.g. *reconfiguration with sync* to the SCell. After reception of the response, the UE may perform a mobility to the SCell.

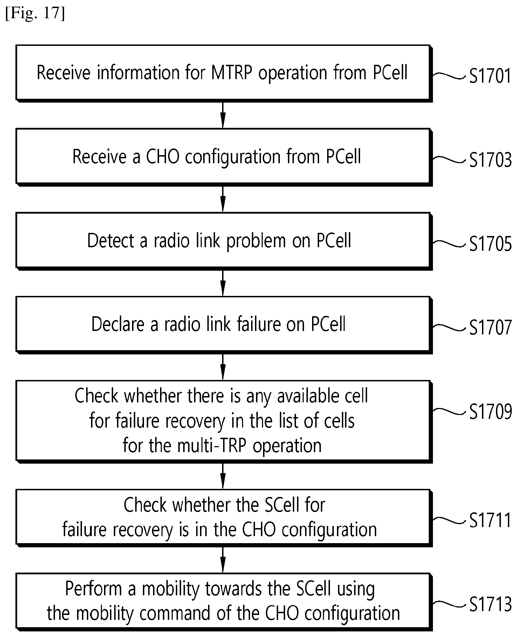

FIG. 17 shows an example of a method for connection failure recovery on PCell via SCell with configuration for mobility according to an embodiment of the present disclosure. The method may be performed by a UE and/or a wireless device.

Referring to FIG. 17, in step S1701, the UE may receive information for multi-TRP operation from PCell. After the establishment of RRC connection with PCell, PCell may send an RRC Reconfiguration message including information for the multi-TRP operation. The information for the multi-TRP operation may comprise multiple cell information i.e., a list of cells including SCells and/or non-serving cells, and cell information (e.g., PCI, NR global cell identity (NCGI), or reference RS of each cell).

After reception of the information for the multi-TRP operation, the UE may perform link monitoring of the multiple cells in the information for the multi-TRP operation and select additional TRP(s) including transmission points and/or reception points related to the multiple cells for data transmission according to the multi-TRP operation. The selected TRP including transmission point and/or reception point may be changed by a result of the link monitoring of the multiple cells.

In step S1703, the UE may receive CHO configuration from PCell. The UE may receive one or more mobility commands for candidate target cells and execution conditions corresponding to each mobility command from PCell. The UE may perform cell evaluation for mobility execution according to the execution conditions.

In step S1705, the UE may suffer a radio link problem on PCell. The UE RRC may receive one or more out-of-sync indications from the UE PHY. In the out-of-sync indications, one or more cell information related to the list of cells in the information for the multi-TRP operation is included for recovery. The cell information may comprise PCI and/or available TRP(s).

In step S1707, the UE may declare a radio link failure on PCell. Upon receiving N310 consecutive "out-of-sync" indications for PCell, the UE may start T310 timer. Upon expiry of T310, the UE may declare a radio link failure on PCell.

In step S1709, the UE may check whether there is any available cell for failure recovery in the list of cells for the multi-TRP operation. Based on the cell information received by out-of-sync indications from the UE PHY, the UE may check which inter cells are still good to transmit data via multi-TRP operation. From the out-of-sync indications, the UE may select an SCell as an available cell for recovery.

In step S1711, the UE may check whether the SCell for failure recovery is in the CHO configuration. After selection of the SCell for failure recovery, the UE may check whether the SCell in the list of cells for the multi-TRP operation is also in the list of candidate target cells of the CHO configuration.

In step S1713, the UE may perform a mobility towards the SCell using the mobility command of the CHO configuration. The UE may apply the mobility command for the SCell. Optionally the UE may send a recovery request to the SCell to indicate that the UE performs mobility for connection failure recovery. The UE may receive a response for the recovery request as RRC Reconfiguration or RRC Release message.

In figures 14 to 17, the PCell may be replaced with PSCell.

The present disclosure can have various advantageous effects.

For example, the disclosure supports a fast connection failure recovery scenario even though there is no serving cell information at all to perform a connection failure recovery mechanisms, e.g. fast MCG failure recovery or CHO-based failure recovery. Hence the UE doesn't perform the RRC Re-establishment procedure which may cause significant data interruption time (up to 30sec) even in the case that there is no available serving cell information for the connection failure recovery.

## Claims

1. A method performed by a wireless device in a wireless communication system, the method comprising:
receiving (S1401), from a serving cell, a configuration for multiple transmit/receive points, TRPs,
wherein the configuration comprises information for multiple cells other than the serving cell and each of which is related to a corresponding TRP among the multiple TRPs, and wherein the multiple cells comprise one or more non-serving cells;
performing a link monitoring on the multiple cells for the multiple TRPs;
detecting (S1403) a failure on the serving cell;
after detecting the failure on the serving cell, selecting (S1407) a non-serving cell for a TRP among the multiple cells for the multiple TRPs based on the link monitoring on the multiple cells for the multiple TRPs;
transmitting (S1409), to the selected non-serving cell for the TRP, a request message for a recovery of the failure on the serving cell, and
receiving (S1411), a response message for the request message, from the selected non-serving cell.

2. The method of claim 1, wherein the serving cell comprises at least one of a primary cell, PCell, or a primary secondary cell, PSCell, and wherein the multiple cells further comprise one or more secondary cells, SCells.

3. The method of claim 1, further comprising:
receiving, from the non-serving cell, the response message for the request message,
wherein the response message comprises a mobility command; and
performing a mobility to the non-serving cell based on the mobility command.

4. The method of claim 3, wherein the request message comprises an indication for the failure on the serving cell.

5. The method of claim 3, wherein the mobility command comprises a random access configuration for a random access, and
wherein the performing of the mobility comprises performing a random access to the non-serving cell based on the random access configuration.

6. The method of claim 1, further comprising:
receiving, from the serving cell, a plurality of conditional mobility commands each of which is related to a corresponding target cell,
wherein the non-serving cell is a target cell related to one of the plurality of conditional mobility commands.

7. The method of claim 6, wherein the performing of the recovery procedure comprises:
performing a mobility to the non-serving cell based on a mobility command for the target cell.

8. The method of claim 7, further comprising:
receiving, from the non-serving cell, a response message for the request message, wherein the request message comprises an indication that the wireless device performs the mobility for the recovery of the failure.

9. The method of claim 8, wherein the response message corresponds to a radio resource control, RRC, reconfiguration message or an RRC release message.

10. The method of claim 1, wherein the non-serving cell comprises a suitable cell whose quality is higher than a threshold value,
wherein the quality comprises at least one of a beam quality or a cell quality, and
wherein the threshold value comprises at least one of a preconfigured value or a value configured by a network.

11. The method of claim 1, wherein the configuration comprises a plurality of transmission configuration indication, TCI, states each of which is related to a corresponding cell among the multiple cells.

12. The method of claim 11, further comprising:
identifying a beam indicated by a TCI state for the non-serving cell among the plurality of TCI states,
wherein the beam for the non-serving cell is used for the recovery of the failure on the serving cell.

13. The method of claim 1, wherein the wireless device is in communication with at least one of a mobile device, a network, or autonomous vehicles.

14. A wireless device (100) configured to operate in a wireless communication system, the wireless device (100) comprising:
at least one transceiver (106);
at least processor (102); and
at least one computer memory (104) operably connectable to the at least one processor (102) and storing instructions that, based on being executed by the at least one processor (102), perform operations comprising:
receiving, from a serving cell, a configuration for multiple transmit/receive points, TRPs, wherein the configuration comprises information for multiple cells other than the serving cell and each of which is related to a corresponding TRP among the multiple TRPs, and wherein the multiple cells comprise one or more non-serving cells;
performing a link monitoring on the multiple cells for the multiple TRPs; detecting a failure on the serving cell;
after detecting the failure on the serving cell, selecting a non-serving cell for a TRP among the multiple cells for the multiple TRPs based on the link monitoring on the multiple cells for the multiple TRPs;
transmitting, to the selected non-serving cell for the TRP, a request message for a recovery of the failure on the serving cell, and
receiving, a response message for the request message, from the selected non-serving cell.

## Patentansprüche

1. Verfahren, das von einer drahtlosen Vorrichtung in einem drahtlosen Kommunikationssystem durchgeführt wird, wobei das Verfahren Folgendes umfasst:
Empfangen (S1401), von einer bedienenden Zelle, einer Konfiguration für mehrere Sende-/Empfangspunkte, TRP,
wobei die Konfiguration Informationen für mehrere andere Zellen als die bedienende Zelle umfasst, von denen jede mit einem entsprechenden TRP unter den mehreren TRP in Zusammenhang steht, und
wobei die mehreren Zellen eine oder mehrere nicht bedienende Zellen umfassen;
Durchführen einer Verbindungsüberwachung an den mehreren Zellen für die mehreren TRP;
Erkennen (S1403) eines Ausfalls der bedienenden Zelle;
nach dem Erkennen des Ausfalls der bedienenden Zelle, Auswählen (S1407) einer nicht bedienenden Zelle für einen TRP aus den mehreren Zellen für die mehreren TRP basierend auf der Verbindungsüberwachung an den mehreren Zellen für die mehreren TRP;
Übertragen (S1409), an die ausgewählte nicht bedienende Zelle für den TRP, einer Anforderungsnachricht zur Wiederherstellung des Ausfalls der bedienenden Zelle und Empfangen (S1411) einer Antwortnachricht für die Anforderungsnachricht von der ausgewählten nicht bedienenden Zelle.

2. Verfahren nach Anspruch 1, wobei die bedienende Zelle mindestens eine von einer Primärzelle, PCell, oder einer primären Sekundärzelle, PSCell, umfasst, und
wobei die mehreren Zellen ferner eine oder mehrere Sekundärzellen, SCells, umfassen.

3. Verfahren nach Anspruch 1, weiter umfassend:
Empfangen der Antwortnachricht für die Anforderungsnachricht von der nicht bedienenden Zelle,
wobei die Antwortnachricht einen Mobilitätsbefehl umfasst; und
Durchführen einer Mobilität zur nicht bedienenden Zelle basierend auf dem Mobilitätsbefehl.

4. Verfahren nach Anspruch 3, wobei die Anforderungsnachricht eine Angabe für den Ausfall der bedienenden Zelle umfasst.

5. Verfahren nach Anspruch 3, wobei der Mobilitätsbefehl eine zufällige Zugriffskonfiguration für einen zufälligen Zugriff umfasst, und
wobei das Durchführen der Mobilität das Durchführen eines zufälligen Zugriffs auf die nicht bedienende Zelle basierend auf der zufälligen Zugriffskonfiguration umfasst.

6. Verfahren nach Anspruch 1, weiter umfassend:
Empfangen einer Vielzahl von bedingten Mobilitätsbefehlen von der bedienenden Zelle, von denen jeder mit einer entsprechenden Zielzelle in Zusammenhang steht,
wobei die nicht bedienende Zelle eine Zielzelle ist, die mit einem der Vielzahl von bedingten Mobilitätsbefehlen in Zusammenhang steht.

7. Verfahren nach Anspruch 6, wobei das Durchführen des Wiederherstellungsverfahrens Folgendes umfasst:
Durchführen einer Mobilität zur nicht bedienenden Zelle basierend auf einem Mobilitätsbefehl für die Zielzelle.

8. Verfahren nach Anspruch 7, das ferner Folgendes umfasst:
Empfangen einer Antwortnachricht für die Anforderungsnachricht von der nicht bedienenden Zelle, wobei die Anforderungsnachricht eine Angabe umfasst, dass die drahtlose Vorrichtung die Mobilität zur Wiederherstellung des Ausfalls durchführt.

9. Verfahren nach Anspruch 8, wobei die Antwortnachricht einer Funkressourcensteuerungs, RRC,-Rekonfigurationsnachricht oder einer RRC-Freigabenachricht entspricht.

10. Verfahren nach Anspruch 1, wobei die nicht bedienende Zelle eine geeignete Zelle umfasst, deren Qualität höher als ein Schwellenwert ist,
wobei die Qualität mindestens eine von einer Strahlqualität oder einer Zellenqualität umfasst, und wobei der Schwellenwert mindestens einen von einem vorkonfigurierten Wert oder einem durch ein Netzwerk konfigurierten Wert umfasst.

11. Verfahren nach Anspruch 1, wobei die Konfiguration eine Vielzahl von Übertragungskonfigurationsangaben, TCI,-Zustände umfasst, von denen jeder mit einer entsprechenden Zelle unter den mehreren Zellen in Zusammenhang steht.

12. Verfahren nach Anspruch 11, weiter umfassend:
Identifizieren eines Strahls, der durch einen TCI-Zustand für die nicht bedienende Zelle unter der Vielzahl von TCI-Zuständen angegeben wird,
wobei der Strahl für die nicht bedienende Zelle zur Wiederherstellung des Ausfalls der bedienenden Zelle verwendet wird.

13. Verfahren nach Anspruch 1, wobei die drahtlose Vorrichtung mit mindestens einem von einer mobilen Vorrichtung, einem Netzwerk oder autonomen Fahrzeugen in Kommunikation steht.

14. Drahtlose Vorrichtung (100), die so konfiguriert ist, dass sie in einem drahtlosen Kommunikationssystem arbeitet, wobei die drahtlose Vorrichtung (100) Folgendes umfasst:
mindestens einen Transceiver (106);
mindestens einen Prozessor (102); und
mindestens einen Computerspeicher (104), der betriebsfähig mit dem mindestens einen Prozessor (102) verbunden werden kann und Anweisungen speichert, die basierend darauf, dass sie von dem mindestens einen Prozessor (102) ausgeführt werden, Operationen durchführen, die Folgendes umfassen:
Empfangen, von einer bedienenden Zelle, einer Konfiguration für mehrere Sende-/Empfangspunkte , TRP, wobei die Konfiguration Informationen für mehrere andere Zellen als die bedienende Zelle umfasst, von denen jede mit einem entsprechenden TRP unter den mehreren TRP in Zusammenhang steht, und
wobei die mehreren Zellen eine oder mehrere nicht bedienende Zellen umfassen;
Durchführen einer Verbindungsüberwachung an den mehreren Zellen für die mehreren TRP;
Erkennen eines Ausfalls an der bedienenden Zelle;
nach dem Erkennen des Ausfalls an der bedienenden Zelle, Auswählen einer nicht bedienenden Zelle für einen TRP aus den mehreren Zellen für die mehreren TRP basierend auf der Verbindungsüberwachung an den mehreren Zellen für die mehreren TRP;
Übertragen, an die ausgewählte nicht bedienende Zelle für den TRP, einer Anforderungsnachricht zur Wiederherstellung des Ausfalls der bedienenden Zelle und Empfangen einer Antwortnachricht für die Anforderungsnachricht von der ausgewählten nicht bedienenden Zelle.

## Revendications

1. Procédé réalisé par un dispositif sans fil dans un système de communication sans fil, le procédé comprenant :
la réception (S1401), à partir d'une cellule de desserte, d'une configuration pour plusieurs points d'émission/de réception, TRP,
dans lequel la configuration comprend des informations pour plusieurs cellules autres que la cellule de desserte et dont chacune est liée à un TRP correspondant parmi les multiples TRP, et
dans lequel les multiples cellules comprennent une ou plusieurs cellules de non-desserte ;
la réalisation d'une surveillance de liaison sur les multiples cellules pour les multiples TRP ;
la détection (S1403) d'une défaillance sur la cellule de desserte ;
après la détection de la défaillance sur la cellule de desserte, la sélection (S1407) d'une cellule de non-desserte pour un TRP parmi les multiples cellules pour les multiples TRP sur la base de la surveillance de liaison sur les multiples cellules pour les multiples TRP ;
l'émission (S1409), à la cellule de non-desserte sélectionnée pour le TRP, d'un message de requête de reprise après défaillance sur la cellule de desserte et
la réception (S1411), d'un message de réponse au message de requête, de la cellule de non-desserte sélectionnée.

2. Procédé selon la revendication 1, dans lequel la cellule de desserte comprend au moins une parmi une cellule primaire, PCell, ou une cellule secondaire primaire, PSCell, et
dans lequel les multiples cellules comprennent en outre une ou plusieurs cellules secondaires, SCells.

3. Procédé selon la revendication 1, comprenant en outre :
la réception, à partir de la cellule de non-desserte, du message de réponse au message de requête,
dans lequel le message de réponse comprend une commande de mobilité ; et
la réalisation d'une mobilité vers la cellule de non-desserte sur la base de la commande de mobilité.

4. Procédé selon la revendication 3, dans lequel le message de requête comprend une indication de la défaillance sur la cellule de desserte.

5. Procédé selon la revendication 3, dans lequel la commande de mobilité comprend une configuration d'accès aléatoire pour un accès aléatoire, et
dans lequel la réalisation de la mobilité comprend la réalisation d'un accès aléatoire à la cellule de non-desserte sur la base de la configuration d'accès aléatoire.

6. Procédé selon la revendication 1, comprenant en outre :
la réception, à partir de la cellule de desserte, d'une pluralité de commandes de mobilité conditionnelle dont chacune est liée à une cellule cible correspondante,
dans lequel la cellule de non-desserte est une cellule cible liée à l'une de la pluralité de commandes de mobilité conditionnelle.

7. Procédé selon la revendication 6, dans lequel la réalisation de la procédure de reprise comprend :
la réalisation d'une mobilité vers la cellule de non-desserte sur la base d'une commande de mobilité pour la cellule cible.

8. Procédé selon la revendication 7, comprenant en outre :
la réception, à partir de la cellule de non-desserte, d'un message de réponse au message de requête, dans lequel le message de requête comprend une indication que le dispositif sans fil réalise la mobilité pour la reprise après défaillance.

9. Procédé selon la revendication 8, dans lequel le message de réponse correspond à un message de reconfiguration de contrôle de ressource radio, RRC, ou à un message de libération RRC.

10. Procédé selon la revendication 1, dans lequel la cellule de non-desserte comprend une cellule appropriée dont la qualité est supérieure à une valeur seuil,
dans lequel la qualité comprend au moins une parmi une qualité de faisceau ou une qualité de cellule, et dans lequel la valeur seuil comprend au moins une parmi une valeur préconfigurée ou une valeur configurée par un réseau.

11. Procédé selon la revendication 1, dans lequel la configuration comprend une pluralité d'états d'indication de configuration d'émission, TCI, dont chacun est lié à une cellule correspondante parmi les multiples cellules.

12. Procédé selon la revendication 11, comprenant en outre :
l'identification d'un faisceau indiqué par un état TCI pour la cellule de non-desserte parmi la pluralité d'états TCI,
dans lequel le faisceau pour la cellule de non-desserte est utilisé pour la reprise après défaillance sur la cellule de desserte.

13. Procédé selon la revendication 1, dans lequel le dispositif sans fil est en communication avec au moins un parmi un dispositif mobile, un réseau ou des véhicules autonomes.

14. Dispositif sans fil (100) configuré pour fonctionner dans un système de communication sans fil, le dispositif sans fil (100) comprenant :
au moins un émetteur-récepteur (106) ;
au moins processeur (102) ; et
au moins une mémoire informatique (104) pouvant être connectée en fonctionnement à l'au moins un processeur (102) et stockant des instructions qui, sur la base de leur exécution par l'au moins un processeur (102), réalisent des opérations comprenant :
la réception, à partir d'une cellule de desserte, d'une configuration pour plusieurs points d'émission/de réception, TRP, dans lequel la configuration comprend des informations pour plusieurs cellules autres que la cellule de desserte et dont chacune est liée à un TRP correspondant parmi les multiples TRP, et
dans lequel les multiples cellules comprennent une ou plusieurs cellules de non-desserte ;
la réalisation d'une surveillance de liaison sur les multiples cellules pour les multiples TRP ;
la détection d'une défaillance sur la cellule de desserte ;
après la détection de la défaillance sur la cellule de desserte, la sélection d'une cellule de non-desserte pour un TRP parmi les multiples cellules pour les multiples TRP sur la base de la surveillance de liaison sur les multiples cellules pour les multiples TRP ;
l'émission, à la cellule de non-desserte sélectionnée pour le TRP, d'un message de requête de reprise après défaillance sur la cellule de desserte et
la réception, d'un message de réponse au message de requête, à partir de la cellule de non-desserte sélectionnée.
